(19) Europäisches Patentamt / European Patent Office / Office européen des brevets

(11) **EP 1 457 846 B1**

(12) **EUROPEAN PATENT SPECIFICATION**

(45) Date of publication and mention
of the grant of the patent:
**25.11.2009 Bulletin 2009/48**

(51) Int Cl.:
***G05B 11/01*** *(2006.01)*　　***G05B 6/02*** *(2006.01)*
***G05B 13/02*** *(2006.01)*

(21) Application number: **04250331.8**

(22) Date of filing: **22.01.2004**

(54) **Improving stability and response of control systems**

Verbesserung von Stabilität und Antwortverhalten von Regelungssystemen

Amélioration de la stabilité et de la réponse de systèmes de régulation

(84) Designated Contracting States:
**DE FR GB**

(30) Priority: **11.03.2003 GB 0305594**

(43) Date of publication of application:
**15.09.2004 Bulletin 2004/38**

(73) Proprietor: **ROLLS-ROYCE PLC**
**London, SW1E 6AT (GB)**

(72) Inventor: **Moss, Andrew John**
**Little Stoke**
**Bristol BS34 6RN (GB)**

(74) Representative: **Tindall, Adam et al**
**Rolls Royce plc**
**P.O. Box 3**
**Filton**
**Bristol**
**BS34 7QE (GB)**

(56) References cited:
**DE-A1- 4 008 447　US-A- 3 535 496**
**US-A- 4 243 922　US-A- 5 475 291**

- **PATENT ABSTRACTS OF JAPAN vol. 016, no. 231 (P-1361), 28 May 1992 (1992-05-28) & JP 04 049531 A (MATSUSHITA ELECTRIC IND CO LTD), 18 February 1992 (1992-02-18)**
- **PATENT ABSTRACTS OF JAPAN vol. 1998, no. 03, 27 February 1998 (1998-02-27) & JP 09 293251 A (SANYO ELECTRIC CO LTD), 11 November 1997 (1997-11-11)**
- **PATENT ABSTRACTS OF JAPAN vol. 016, no. 482 (E-1275), 7 October 1992 (1992-10-07) & JP 04 172982 A (KONICA CORP), 19 June 1992 (1992-06-19)**

## Description

The present invention relates to improving stability and response of control systems, for example, but not exclusively, control systems used for controlling gas turbine engines using a temperature signal as an input.

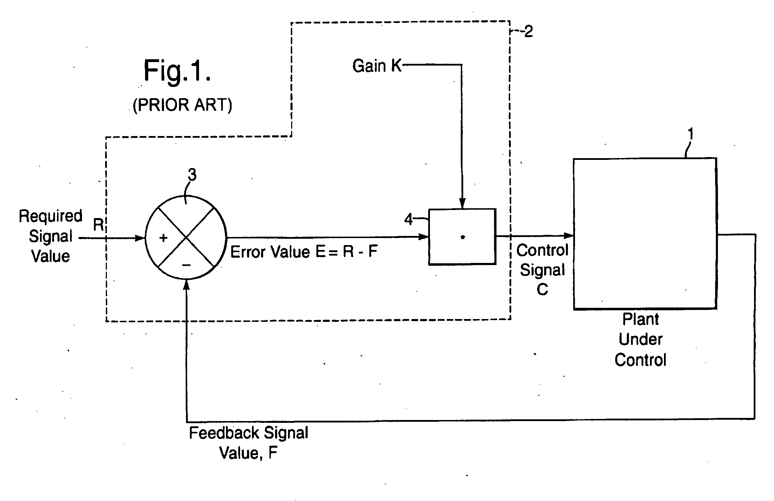

Figure 1 of the accompanying drawings illustrates, schematically, a simplified control system and plant under control. The plant under control 1 receives control signals from the control system 2. A feedback signal F is supplied from the plant under control 1, to the control system 2.

The control system 2 receives a required signal value R and using an adder 3 generates an error value E. The error value E is equal to the difference between the required signal value R and the feedback signal F. This error signal is supplied to a gain multiplier 4 to produce the control signal C for supply to the plant under control. The gain multiplier 4 is supplied with a gain signal K, such that the control signal output from the control system 2 is equal to the error signal multiplied by the gain K. Accordingly, in previously considered systems, the gain K has been adjusted in dependence upon the conditions within the plant under control. These conditions, however, are external to the signal being controlled.

For example, the feedback signal could be a temperature signal, with the required signal value being a desired output temperature from the plant under control. Other parameters of the plant under control may affect the plant such that the temperature control gain needs to be adjusted, irrespective of the change in output temperature. For this reason, the gain K is adjusted with reference to those other parameters.

For example, the feedback signal could be a digitised analogue signal (TGT) output from a thermo coupler array in a gas turbine engine. The TGT signal is often polluted with noise, and this noise can cause instability in the input to the controller. The instability in the input signal to the controller can cause instability in the output control signal C, and so therefore can result in engine instability. This is clearly undesirable.

US Patent No 3535496 and US Patent No 5475291 describe a system in which the value of a gain applied to a control signal is varied such that the ratio between the magnitude of a change in the output signal and the magnitude of a change in the input signal is different for different levels of input signal. That is to say, for a particular rate of change in the error signal, the rate of change of the output signal generated by the comptroller has a particular magnitude.

However such systems are vulnerable to instability if the parameter being controlled is close to a point about which a sudden change would cause a large disturbance.

It is therefore desirable to provide a system and method which can further reduce the effects of the noise signals in feedback signals supplied to the control system.

According to one aspect of the present invention, there is provided a control system for supplying a control signal to a controlled apparatus, the system comprising an error generation means operable to produce an error signal from a feedback value relating to a measured operating parameter of a controlled apparatus, and a required value relating to a desired operating parameter value of the controlled apparatus; and a controller operable to receive the error signal and a gain signal, and to output a control signal in dependence upon the values thereof, wherein a gain selection means is provided, which gain selection means is operable to receive the error signal and to output a gain signal to the controller in dependence upon the value of the error signal, **characterised in that** a disturbance compensation means is provided which is operable to receive an input value relating to at least one other parameter value of the controlled apparatus, and to receive the error signal, and to produce a compensated error signal in dependence upon the input value and the error signal, and to supply the compensated error signal to the gain selection means in place of the error signal.

It is emphasised that the term "comprises" or "comprising" is used in this specification to specify the presence of stated features, integers, steps or components, but does not preclude the addition of one or more further features, integers, steps or components, or groups thereof.

Figures 1, 2 and 3 (PRIOR ART) schematically illustrate previously considered control systems;
Figures 4 to 6 schematically illustrate respective embodiments of the present invention;

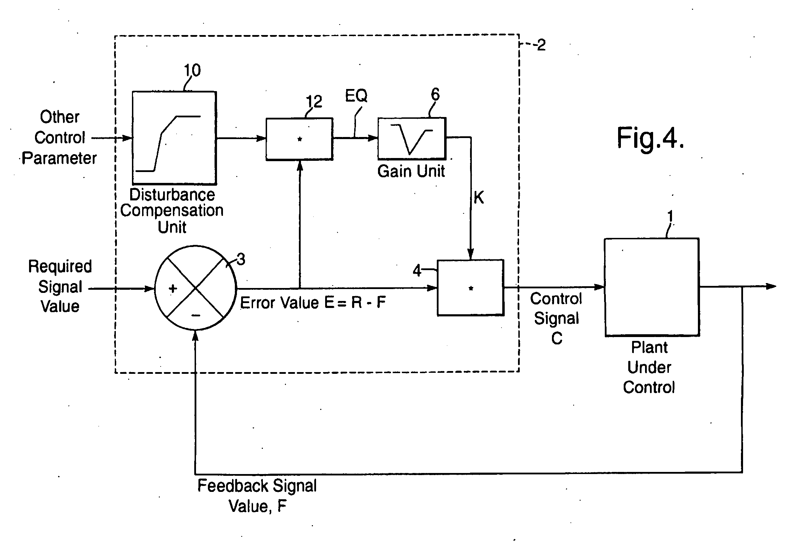

It will be readily appreciated that the invention can be embodied in hardware or software or a combination of the two. The Figure 4 to 6 illustrations are merely intended to set out in an easily understandable form the principles of the present invention.

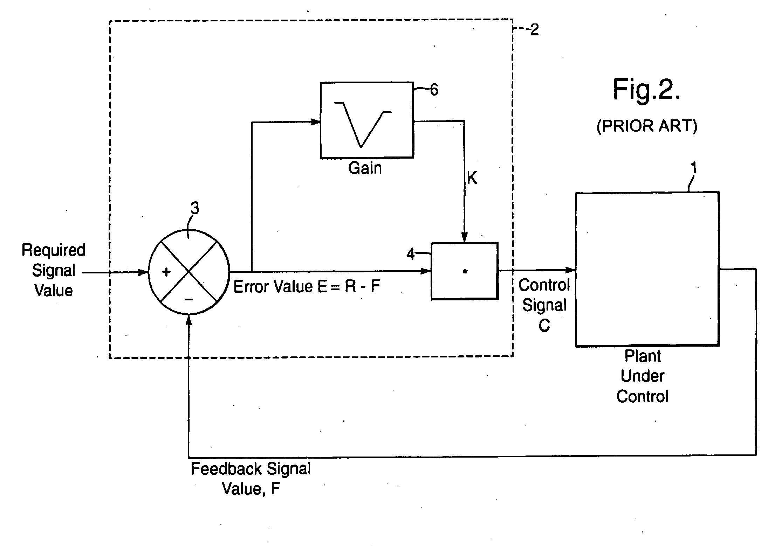

The control system 2 of Figure 2 (PRIOR ART) differs from that shown in Figure 1 (PRIOR ART) by virtue of the provision of the gain unit 6, which supplies the gain signal K to the multiplier 4. The gain unit 6 receives the error value E as an input, and determines the gain value K according the value of the input error value E. The gain unit is preferably provided by a lookup table which stores the appropriate values of gain K for the range of input values to be expected

In accordance with the present invention, the magnitude of the gain K is reduced as the magnitude of the error reduces. The relationship between the error signal and the gain K need not be linear, or indeed symmetrical about the zero error point.

An example of a gain value lookup table is given below.

| Error | Gain Lookup Table Entry |
|-------|-------------------------|
| -5 | 2.5 |
| -4 | 2.5 |
| -3 | 2.5 |
| -2 | 2.0 |
| -1 | 1.0 |
| 0 | 1.0 |
| +1 | 1.0 |
| +2 | 3.0 |
| +3 | 4.0 |
| +4 | 4.0 |
| +5 | 4.0 |

The values are merely exemplary and are shown to given an idea of how the gain value varies with the magnitude of the error signal. The values in a practical example would be in "appropriate" units for the application concerned.

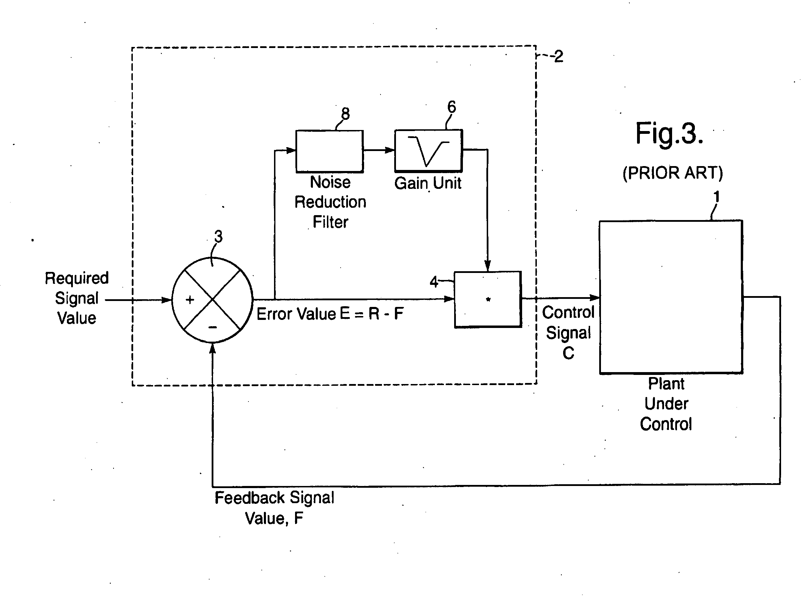

In some circumstances, the feedback signal F can suffer from high noise pollution, and this can lead to noise being propagated through to the error value E. The configuration shown in Figure 3 (PRIOR ART) includes a noise reduction filter 8, which can have any appropriate transfer function. For example, the transfer function can be given by the expression:

$$F(s) = \frac{1}{(\tau + st)}$$

The output from the noise reduction filter is supplied to the gain unit for determining the gain value K. The figure 3 (PRIOR ART) embodiment is intended to reduce gain fluctuations due to signal noise introduced into the error value signal E.

The scheme described with reference to Figure 2 (PRIOR ART) operates so that the gain K supplied to the multiplier unit 4 is reduced as the error signal approaches zero. This means that whilst the plant under control 1 is operating about the required signal value R, the gain of the control system is low. This has the advantage that the control system can have improved stability about that set point. However, this also means that the response of the control system to transient disturbances in other parameters of the plant under control 1, could result in the controlled parameter moving away from the set point, and being returned to that set point slowly, because the gain of the control system is low. The embodiment of the present invention shown in Figure 4, includes a disturbance compensation unit 10 which is connected to receive a signal relation to at least one other control parameter of the plant under control 1. This disturbance compensation unit 10 operates to receive the control parameter P and to produce a compensation signal Q for supply to a second multiplier 12. The multiplier unit 12 serves to multiply the error value E by the compensation signal Q to produce a compensated error signal for supply to the gain unit 6. The purpose of the disturbance compensation unit 10 and second multiplier 12 is to allow the control gain to be modified further around the set point, when the operating conditions make this desirable. One example is when the parameter under control is close to a set point, but a sudden change in another parameter of the plant under control 1 would cause a large disturbance to the parameter of interest. In such a case, the control gain is increased by the disturbance compensation unit and multiplier 12 so that the control gain K can be large enough to enable speedy response of the control system 2. Having a larger value of gain K enables the control signal C to be larger for a given error value E, such that the transient disturbance caused by the other conditions of the plant under control 1 so that the control signal C is enlarged to enable fast response of the plant under control.

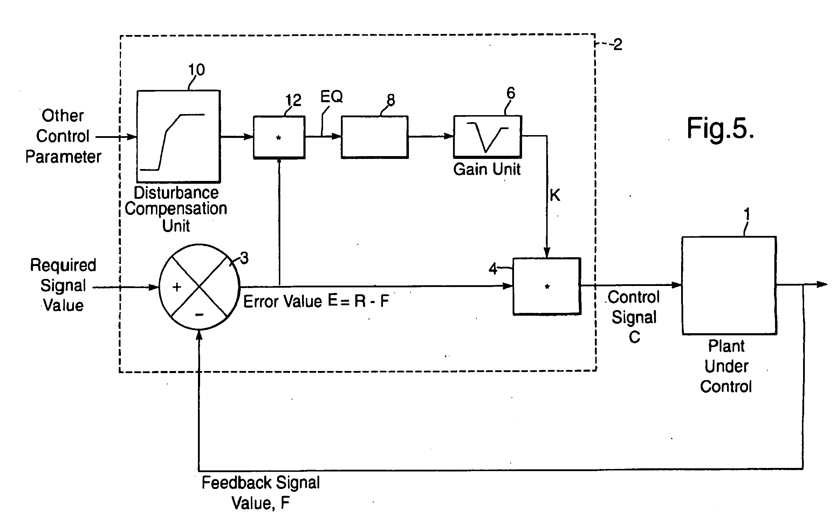

It will be readily appreciated that the noise reduction filter 8 and the disturbance compensation unit 10 can be combined in the present invention, and such an embodiment is shown in Figure 5.

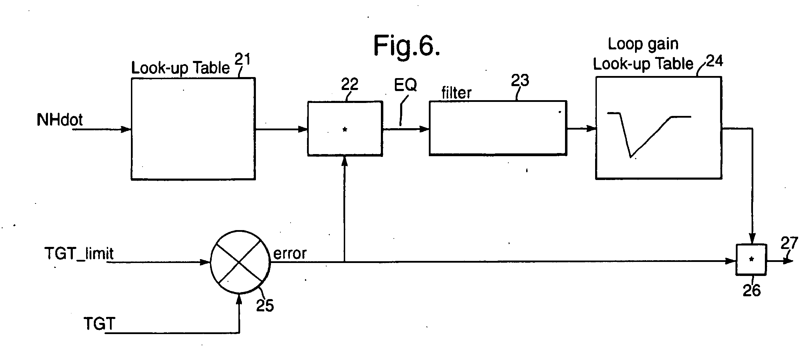

Figure 6 of the accompanying drawings illustrates the control system when applied to a gas turbine engine control system. The parameter to be controlled in the Figure 6 case is the turbine gas temperature (TGT) and is represented by a TGT signal. The reference value for the TGT signal is referred to as TGT_limit.

In Figure 6, the TGT signal is received and compared with a reference signal TGT_limit. The comparison produces an error signal (error) which is output from an adder 25. The error signal E is supplied to a multiplier 22. The multiplier 22 serves to multiple the error signal E by a compensation signal Q in order to compensate for transient disturbances, as described above. The modified error signal EQ is supplied to a filter that removes noise before the signal is passed to the next part of the system.

The filtered error signal is supplied to a loop gain lookup table 24 which uses the filtered error signal as an input to determine a value of loop gain that will be applied to the remainder of the control circuit. The loop gain value is output from the lookup table 24 and multiplied with the error signal by a multiplier 26. This multiplied error signal is then supplied as an output 27 to the gas turbine engine.

The embodiment causes the control loop gain to be reduced as the required TGT reference point is approached by the actual TGT signal. The reduction in loop gain reduces the amplitude of the control fluctuations, or deviations from the datum; the gain being a function of the error between the datum and the controlled input. The error will fluctuate due to noise on the control input and this would normally cause the gain to fluctuate. However, the error signal is filtered to remove this noise before the gain is calculated. The smoothed error signal then produces a significantly smoother loop gain and this in turn improves the stability of the control loop which results in greater fluctuation rejection.

As described above, the stabilising technique described produces transient side effects, however. As a consequence of a reduction in the loop gain, the control loop will reject errors more slowly than previously. Accordingly, rapid changes in the error may result in poor transient performance. Restoring the loop gain to its nominal setting when transient effects are detected will solve this problem. In an embodiment of the present invention, this is achieved by increasing the size of the error signal which is input to the filter. In Figure 6 a lookup table 21 is supplied with an input which relates to an acceleration parameter (Nhdot) of the engine. The look-up table 21 outputs the compensation value to a multiplier 22 to multiply the error signal. This adjustment increases the gain rapidly and allows the controller to reject the disturbance adequately. As an alternative to the acceleration signal, transient changes could be detected using the rate of change of the TGT signal, or another less noisy signal.

The overall principle of embodiments of the present invention is that the error signal itself is used to modify the gain of the control loop. The reduction in loop gain then reduces the fluctuation in the error, which further reduces the gain. The result is a reduction in fluctuations due to noise.

Figure 6 illustrates a generalized method embodying the present invention, in which a feedback signal is received, and processed using the loop gain control of the present invention. The control signal is then supplied to the plant under control.

The present invention preferably operates in the digital domain so that the gain unit 6, filter 8, and disturbance compensation unit 10 can be implemented in software. As an alternative, the signals could be analogue signals and processed accordingly, or a combination of analogue and digital techniques can be used.

The technique taught by the present invention enables more stable engine control to be achieved at a steady state, whilst still maintaining acceptable transient performance.

Although the example given above relates to gas turbine engine control, it will be readily appreciated that the principles of the present invention can be applied to any kind of control system for controlling plant. For example, the control system embodying the present invention could be applied to aeronautical applications in general, and not just to gas turbine engine control.

**Claims**

1. A control system for supplying a control signal (C) to a controlled apparatus (1), the system comprising:

    an error generation means (3) operable to produce an error signal (E) from a feedback value (F) relating to a measured operating parameter of a controlled apparatus (1), and a required value (R) relating to a desired operating parameter value of the controlled apparatus (1); and a controller (4) operable to receive the error signal (E) and a gain signal (K), and to output a control signal (C) in dependence upon the values thereof, wherein a gain selection means (6) is provided, which gain selection means is operable to receive the error signal (E) and to output a gain signal (K) to the controller (4) in dependence upon the value of the error signal (E), **characterised in that** a disturbance compensation means (10, 12) is provided which is operable to receive an input value relating to at least one other parameter value (P) of the controlled apparatus, and to receive the error signal, and to produce a compensated error signal (EQ) in dependence upon the input value and the error signal, and to supply the compensated error signal (EQ) to the gain selection means (6) in place of the error signal.

2. A system as claimed in claim 1, wherein the controller (4) is operable to output a signal equivalent to the error signal multiplied by the gain signal.

3. A system as claimed in claim 1 or 2, wherein the error signal (E) equals the difference between the required value (R) and the feedback value (F).

4. A system as claimed in any one of the preceding claims, wherein a filter means (8) is provided which is operable to filter said compensated error signal (EQ) and to supply the filtered error signal to the gain selection means (6) in place of said compensated error signal (EQ).

5. A system as claimed in any one of the preceding claims, wherein the disturbance compensation means (10, 12) comprises a lookup table (10) for receiving the input value, and a multiplier (12) for receiving a compensation value from the lookup table, and for multiplying the error signal by the compensation value to produce the compensated error signal (EQ).

6. A method for controlling a controlled apparatus having a measured operating parameter, the method comprising:

generating an error signal (E) from a feedback value (F) relating to a measured operating parameter value of a controlled apparatus (1), and a required value (R) relating to a desired value of the operating parameter of the controlled apparatus (1); and

generating a control signal (C) in dependence upon the error signal (E) and a received gain signal (K),

wherein the gain signal is selected in dependence upon the error signal,

**characterised in that** a compensated error signal (EQ) is produced using a disturbance compensation means (10, 12) which is operable to receive an input value (P) relating to at least one other parameter value of the controlled apparatus, and to receive the error signal, and to produce the compensated error signal (EQ) in dependence upon the input value and the error signal, the compensated error signal (EQ) being supplied in place of the error signal.

7. A method as claimed in claim 6, wherein the control signal is equivalent to the error signal multiplied by the gain signal.

8. A method as claimed in claim 6 or 7, wherein the error signal (E) equals the difference between the required value (R) and the feedback value (F).

9. A method as claimed in any one of claims 6 to 8, wherein said compensated error signal (EQ) is filtered and the filtered error signal is used to select the gain signal (6) in place of said compensated error signal (EQ).

10. A method as claimed in any one of claims 6 to 9, wherein the disturbance compensation means (10, 12) comprises a lookup table (10) for receiving the input value, and a multiplier (12) for receiving a compensation value from the lookup table, and for multiplying the error signal by the compensation value to produce the compensated error signal (EQ).

11. A gas turbine engine controller including a control system as claimed in any one of claims 1 to 5.

12. A controller as claimed in claim 11, wherein the measured operating parameter is temperature.

13. A method of controlling a gas turbine engine including a method as claimed in any one of claims 6 to 10.

14. A method as claimed in claim 13, wherein the measured operating parameter is temperature.

**Patentansprüche**

1. Steuersystem zum Zuführen eines Steuersignals (C) zu einer gesteuerten Einrichtung (1), wobei das System aufweist:

ein Fehlererzeugungsmittel (3), das zum Erzeugen eines Fehlersignals (E) aus einem Rückführungswert (F) im Zusammenhang mit einem gemessenen Betriebsparameter der gesteuerten Einrichtung (1) und eines Sollwerts (R) im Hinblick auf einen gewünschten Betriebsparameterwert der gesteuerten Einrichtung (1) dient, und

einem Regler (4), der zum Empfang des Fehlersignals (E) und eines Verstärkungssignals (K) und zur Ausgabe eines Steuersignals (C) in Abhängigkeit von deren Werten dient,

wobei ein Verstärkungswahlmittel (6) vorgesehen ist, das zum Empfang des Fehlersignals (E) und Abgabe eines Verstärkungssignals (K) zum Regler (4) in Abhängigkeit vom Wert des Fehlersignals (E) dient,

**dadurch gekennzeichnet, dass** ein Störungskompensationsmittel (10, 12) vorgesehen ist, das zum Empfang eines Eingangswerts in Bezug auf mindestens einen Parameterwert (P) der gesteuerten Einrichtung und zum Empfang des Fehlersignals und zum Erzeugen eines kompensierten Fehlersignals (EQ) in Abhängigkeit von dem Eingangssignal und dem Fehlersignal, und zum Zuführen des kompensierten Fehlersignals (EQ) zu dem Verstärkungswahlmittel (6) anstelle des Fehlersignals dient.

2. System nach Anspruch 1, wobei der Regler (4) zum Abgeben eines Signals dient, das äquivalent zum Fehlersignal, multipliziert mit dem Verstärkungssignal, ist.

3. System nach Anspruch 1 oder 2, wobei das Fehlersignal (E) gleich der Differenz zwischen dem Sollwert (R) und dem Rückführungswert (F) ist.

4. System nach einem der vorhergehenden Ansprüche, wobei ein Filtermittel (8) vorgesehen ist, das zum Filtern des kompensierten Fehlersignals (EQ) und zum Zuführen des gefilterten Fehlersignals zum Verstärkungswahlmittel (6) anstelle des kompensierten Fehlersignals (EQ) dient.

5. System nach einem der vorhergehenden Ansprüche, wobei das Störungskompensationsmittel (10, 12) eine Tabelle (10) zum Empfang des Eingangssignals und einen Multiplizierer (12) zum Empfang eines Kompensationswerts der Tabelle und zum Multiplizieren des Fehlersignals mit dem Kompensationswert zum Erzeugen eines kompensierten Fehlersignals (EQ) aufweist.

6. Verfahren zur Steuerung einer gesteuerten Einrichtung mit einem gemessenen Betriebsparameter, wobei das Verfahren umfasst:

Erzeugen eines Fehlersignals (E) aus einem Rückführungswert (F) in Bezug auf einen gemessenen Betriebsparameterwert einer gesteuerten Einrichtung (1), und eines Sollwerts (R) in Bezug auf einen gewünschten Wert des Betriebsparameters der gesteuerten Einrichtung (1), und
Erzeugen eines Steuersignals (C) in Abhängigkeit von dem Fehlersignal (E) und einem empfangenen Verstärkungssignal (K),

wobei das Verstärkungssignal in Abhängigkeit von dem Fehlersignal ausgewählt wird,
**dadurch gekennzeichnet, dass** ein kompensiertes Fehlersignal (EQ) unter Verwendung eines Störungskompensationsmittels (10, 12) erzeugt wird, das zum Empfang eines Eingangswerts (P) in Bezug auf mindestens einen anderen Parameterwert der gesteuerten Einrichtung und zum Empfang des Fehlersignals und zum Erzeugen des kompensierten Fehlersignals (EQ) in Abhängigkeit von dem Eingangswert und dem Fehlersignal dient, wobei das kompensierte Fehlersignal (EQ) anstelle des Fehlersignals zugeführt wird.

7. Verfahren nach Anspruch 6, wobei das Steuersignal äquivalent dem Fehlersignal, multipliziert mit dem Verstärkungssignal ist.

8. Verfahren nach Anspruch 6 oder 7, wobei das Fehlersignal (E) gleich der Differenz zwischen dem Sollwert (R) und dem Rückführungswert (F) ist.

9. Verfahren nach einem der Ansprüche 6 bis 8, wobei das kompensierte Fehlersignal (EQ) gefiltert wird, und das gefilterte Fehlersignal anstelle des kompensierten Fehlersignals (EQ) zum Auswählen des Verstärkungssignals (6) verwendet wird.

10. Verfahren nach einem der Ansprüche 6 bis 9, wobei das Störungskompensationsmittel (10, 12) eine Tabelle (10) zum Empfang des Eingangswerts und einen Multiplizierer (12) zum Empfang eines Kompensationswerts von der Tabelle und zum Multiplizieren des Fehlersignals mit dem Kompensationswert zum Erzeugen des kompensierten Fehlersignals (EQ) aufweist.

11. Gasturbinenregler mit einem Steuersystem nach einem der Ansprüche 1 bis 5.

12. Regler nach Anspruch 11, wobei der gemessene Betriebsparameter eine Temperatur ist.

13. Verfahren zum Steuern eines Gasturbinentriebwerks mit einem Verfahren nach einem der Ansprüche 6 bis 10.

14. Verfahren nach Anspruch 13, wobei der gemessene Betriebsparameter eine Temperatur ist.

**Revendications**

1. Système de commande destiné à fournir un signal de commande (C) à un appareil régulé (1), le système comprenant:

un moyen de génération d'erreur (3) utilisable pour produire un signal d'erreur (E) provenant d'une valeur de contre réaction (F) se rapportant à un paramètre de fonctionnement mesuré de l'appareil régulé (1), et
un contrôleur (4) utilisable pour recevoir le signal d'erreur (E) et un signal de gain (K), et pour fournir en sortie un signal de commande (C) dépendant des valeurs de ceux-ci,

dans lequel il est procuré un moyen de sélection de gain (6), lequel moyen de sélection de gain est utilisable pour recevoir le signal d'erreur (E) et pour fournir en sortie un signal de gain (K) au contrôleur (4) en fonction de la valeur du signal d'erreur (E), **caractérisé en ce qu'**il est fourni des moyens de compensation de perturbation (10, 12), lesquels sont utilisables pour recevoir une valeur d'entrée se rapportant à au moins une autre valeur de paramètre (P) de l'appareil régulé, et pour recevoir le signal d'erreur ainsi que pour produire un signal d'erreur compensé (EQ) en fonction de la valeur d'entrée et du signal d'erreur, tout comme pour appliquer le signal d'erreur compensé (EQ) au moyen de sélection de gain (6) à la place du signal d'erreur.

2. Système selon la revendication 1, dans lequel le contrôleur (4) est utilisable pour fournir en sortie un signal équivalent au signal d'erreur multiplié par le signal de gain.

3. Système selon la revendication 1 ou 2, dans lequel le signal d'erreur (E) égale la différence entre la valeur requise (R) et la valeur de contre réaction (F).

4. Système selon l'une quelconque des revendications précédentes, dans lequel un moyen de filtre (8) est prévu, lequel est utilisable afin de filtrer ledit signal d'erreur compensé (EQ) et appliquer le signal d'erreur filtré au moyen de sélection de gain (6) à la place dudit signal d'erreur compensé (EQ).

**5.** Système selon l'une quelconque des revendications précédentes, dans lequel les moyens de compensation de perturbation (10, 12) comprennent une table de consultation (10) permettant de recevoir la valeur d'entrée et un multiplieur (12) permettant de recevoir une valeur de compensation provenant de la table de consultation et de multiplier le signal d'erreur par la valeur de compensation ainsi que de produire le signal d'erreur compensé (EQ).

**6.** Procédé destiné à commander un appareil régulé présentant un paramètre de fonctionnement mesuré, le procédé comprenant :

la génération d'un signal d'erreur (E) à partir d'une valeur de contre réaction (F) se rapportant à une valeur mesurée de paramètre de fonctionnement sur un appareil régulé (1), et d'une valeur requise (R) se rapportant à une valeur souhaitée du paramètre de fonctionnement de l'appareil régulé (1), et
la génération d'un signal de commande (C) en fonction du signal d'erreur (E) et d'un signal de gain reçu (K),

dans lequel le signal de gain est sélectionné en fonction du signal d'erreur,
**caractérisé en ce qu'**un signal d'erreur compensé (EQ) est produit en utilisant des moyens de compensation de perturbation (10, 12) qui sont utilisables pour recevoir une valeur d'entrée (P) se rapportant à au moins une autre valeur de paramètre de l'appareil régulé, et pour recevoir le signal d'erreur, ainsi que pour produire le signal d'erreur compensé (EQ) en fonction de la valeur d'entrée et du signal d'erreur, le signal d'erreur compensé (EQ) étant appliqué à la place du signal d'erreur.

**7.** Procédé selon la revendication 6, dans lequel le signal de commande est équivalent au signal d'erreur multiplié par le signal de gain.

**8.** Procédé selon la revendication 6 ou 7, dans lequel le signal d'erreur (E) égale la différence entre la valeur requise (R) et la valeur de contre réaction (F).

**9.** Procédé selon l'une quelconque des revendications 6 à 8, dans lequel ledit signal d'erreur compensé (EQ) est filtré, et le signal d'erreur filtré est utilisé pour sélectionner le signal de gain (6) à la place dudit signal d'erreur compensé (EQ).

**10.** Procédé selon l'une quelconque des revendications 6 à 9, dans lequel les moyens de compensation de perturbation (10, 12) comprennent une table de consultation (10) permettant de recevoir la valeur d'entrée et un multiplieur (12) permettant de recevoir une valeur de compensation provenant de la table de consultation et de multiplier le signal d'erreur par la valeur de compensation afin de produire le signal d'erreur compensé (EQ).

**11.** Contrôleur de turbine à gaz incluant un système de commande selon l'une quelconque des revendications 1 à 5.

**12.** Contrôleur selon la revendication 11, dans lequel le paramètre de fonctionnement mesuré est la température.

**13.** Procédé de régulation d'une turbine à gaz incluant un procédé selon l'une quelconque des revendications 6 à 10.

**14.** Procédé selon la revendication 13, dans lequel le paramètre de fonctionnement mesuré est la température.

# Fig.1.
(PRIOR ART)

Fig.2.
(PRIOR ART)

1

Plant
Under
Control

Control
Signal
C

2

K

6

Gain

4

Error Value E = R - F

3

+

−

Feedback Signal
Value, F

Required
Signal
Value

Fig.3.
(PRIOR ART)

Plant Under Control — 1

Control Signal C

Gain Unit — 6

Noise Reduction Filter — 8

Error Value E = R - F

4

Feedback Signal Value, F

3

+ / −

Required Signal Value

2

Fig.4.

EP 1 457 846 B1

Fig.5.

Other Control Parameter

Disturbance Compensation Unit

10

12

EQ

8

6

Gain Unit

K

Required Signal Value

3

+

−

Error Value E = R - F

4

Control Signal C

1

Plant Under Control

Feedback Signal Value, F

2

EP 1 457 846 B1

Fig.6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3535496 A
- US 5475291 A